# EUROPEAN PATENT APPLICATION

(11) **EP 3 750 505 A1**
(43) Date of publication of application: **16.12.2020**
(21) Application number: 19179228.2
(22) Date of filing: 10.06.2019
(51) Int. Cl.: A61C 1/00

(54) **APPARATUS AND METHOD FOR CLEANING AND DISINFECTING THE SUCTION TUBES OF A DENTAL TREATMENT UNIT**

(71) Applicant: CEFLA SOCIETA' COOPERATIVA, 40026 Imola (BO) (IT)
(72) Inventor: LENZI, Plinio Maria, 40026 IMOLA (IT); BENEDETTI, Jarno, 40026 IMOLA (IT)
(74) Representative: Karaghiosoff, Giorgio Alessandro

(57) **Abstract**

Apparatus for the automatic cleaning of suction tubes (15) of a dental treatment unit (1) comprising a body (24) for the insertion of suction tube terminals (18), in its turn comprising:
- A first opening (19) for supplying environmental nebulization air,
- A point (23) water supply,
- A point (22) for supplying a cleaning/disinfecting liquid,
**characterized in that**
it comprises at least a second opening (20) for supplying turbulence air, in a position placed between the point (23) of water supply and the point (22) of supply of a cleaning/disinfecting liquid on one side and a point (17) of insertion of tubes terminal (18) on the other side, with the function of perturbing the suctioned flow with an entrance of air capable of generating a strong turbulence in said tube (15).

## Description

The present invention relates to the technical field of dental treatment units, which are chairs, provided with a water unit, used for performing dental therapies. In particular, the present invention relates to an apparatus and a method to perform the cleaning of suction tubes of a dental treatment unit.

Typically, said dental treatment units are used to perform dental therapies on a patient laying or seating on said dental chair. During therapies, typically dentists use dental instruments supported by a dentist's board, instruments often provided with an air/water spray. Moreover, the patient undergoing therapy continually secretes saliva and can bleed during therapy. Finally, during therapies debris is generated due to the use of dental instruments, e.g. small pieces of enamel, dentin, old amalgam or aesthetical material fillings. In order to keep the operative field clean, in the art it is known to perform said therapies while a suction system is active, which removes water, saliva, blood and solid debris (enamel, dentin, amalgam, polymeric materials) from the oral cavity of the patient. Said suction is performed placing in the oral cavity of the patient a suction disposable or sterilisable cannula, which is mounted on a tube holder terminal at the end of a suction tube, in its turn connected to the water unit.

Typically, suction tubes are corrugated tubes, with the aim of conferring to the tubes the robustness needed in order to prevent their collapsing under the action of suction. On one side, this configuration is important in order to get the needed mechanical features, but on the other side, the cleaning of tubes lumen becomes more difficult.

Alternatively, two-chamber tubes provided with an internal mechanical backing are used, but they are heavier and less manageable of the normal corrugated tubes, while still accumulating dirt in their lumen.

From the above, is easy to realize that the suction circuit is the dirtiest and most contaminated portion of dental treatment units. Consequently, it is particularly important to clean and preferably disinfect the suction circuit.

The art describes different systems for cleaning the suction circuit. E.g. EP0124887A2 of Duerr Dental GmbH describes a typical system for cleaning suction circuits. Said system provides a storage vessel for a cleaning and/or disinfecting concentrate liquid, which, with the aid of a programme control, can be mixed together with the water required by it, by means of a solenoid valve in a pump. Water or water/concentrate mixture is conveyed through the supply line to an intermediate container in the disinfection housing, and conveyed from this to a point wherefrom said mixture is distributed to the lumen of suction tubes.

Another similar system is described in IT 1118545 of Duerr Dental KG, wherein a container holds a mixture of a cleaning/disinfecting liquid. A system withdraws said mixture with water, with the aim of slowly and continuously conveying an aerosol of cleaning/disinfecting liquid to the suction circuit.

The applicant has been providing a system similar to the above-described one in its dental treatment unit for years, provided with a reservoir of a cleaning/disinfecting liquid, a solenoid valve for its delivery, a Venturi suction system for diffusing the liquid inside suction tubes, and a line for supplying water under pressure controlled by a solenoid valve. Both liquids, the cleaning/disinfecting liquid and water, are supplied inside the suction tubes with air taken from the environment, through an opening upstream the point of insertion of the suction tubes to be cleaned. In the lumen of suction tubes, a flow of water and a flow of cleaning/disinfecting liquid are separately sprayed in sequence, always mixed with air.

The cleaning cycle currently used by the present applicant comprises the following steps:
- Make sure that tank contains enough cleaning/disinfecting fluid;
- Remove suction tube terminals from assistant's board supports, making sure that suction motor starts;
- Open suction tube terminal mechanical locks;
- Insert suction tube terminals inside the relevant couplings. The vacuum created inside the tubes starts the flushing cycle;

Flushing cycle operating steps:
- mains water supply for 50 sec. with intermittent operation (2 sec. ON - 1 sec. OFF),
- stop of water flow and supply of 10 cc. of disinfectant fluid,
- stop of disinfection fluid supply and suction continuation for 10 sec.
   - The interruption of the suction flow, with consequent motor stop, determines flushing cycle end;
   - Putting suction tube terminals back into their supports on assistant's board to go back to working condition.

Said cleaning cycle is typically performed at the end of dental therapies on patients, while the dental treatment unit is not used by the dentist. Normally dental assistants perform the above-described method steps.

Nonetheless, in practice it was verified that the cleaning system of the suction apparatus is not always efficient. The cleaning of suction tubes still is a formidable challenge for dental treatment unit manufacturers.

Aim of the present invention is providing an apparatus and a method capable of markedly improving the cleaning and the hygiene of suction tubes, which is easy and quick to use for the dental assistant.

This object is achieved by an apparatus and a method having the features of the independent claims. Advantageous embodiment and refinements are specified in the claims dependent thereon.

According to the present invention, the cleaning of suction tubes was improved in its efficiency thanks to a modulated process supplying liquids (cleaning/disinfecting liquid and water) and air, with a strengthening of the mechanical action and of liquid diffusion in the lumen of tubes, through a turbulent flow generated by the presence of a two points of air supply:
- a first point of air supply in line with the points of insertion of cleaning/disinfecting liquid and water; said point is the same of the known art currently used by the applicant;
- a second point of air supply, through an opening near to the insertion point of suction tubes terminal, through which point of insertion the cleaning/disinfecting liquid and water are suctioned inside the tubes to be cleaned with air.

Surprisingly, the presence of said second opening very near to the insertion point of the suction tubes terminal generates a strong perturbation of the suctioned flow and creates a turbulent flow in the suctioned flow, markedly improving the cleaning efficiency of the system.

In a particularly preferred embodiment, said system is used in combination with suction tube terminals having an internal shape of the terminals free from angles and recesses, which allows to further improve the results of the cleaning cycle.

The advantages connected to the present invention are manifold.

A first advantage is the significant improvement of cleaning efficiency.

A second advantage is that the improvement is obtained with a small modification of a system already in use.

A third advantage is that the improvement in the cleaning efficiency is obtained without increasing the execution time of the cleaning cycle.

Further advantages and properties of the present invention are disclosed in the following description, in which exemplary embodiments of the present invention are explained in detail based on the drawings:
- Figure 1: Axonometric view of a typical dental treatment unit;
- Figure 2: Lateral view of a water group;
- Figure 3: Front view of a water group;
- Figure 4: Front view of a detail of a water group, with removed housings;
- Figure 5: Longitudinal section of a terminal and of a suction tube.

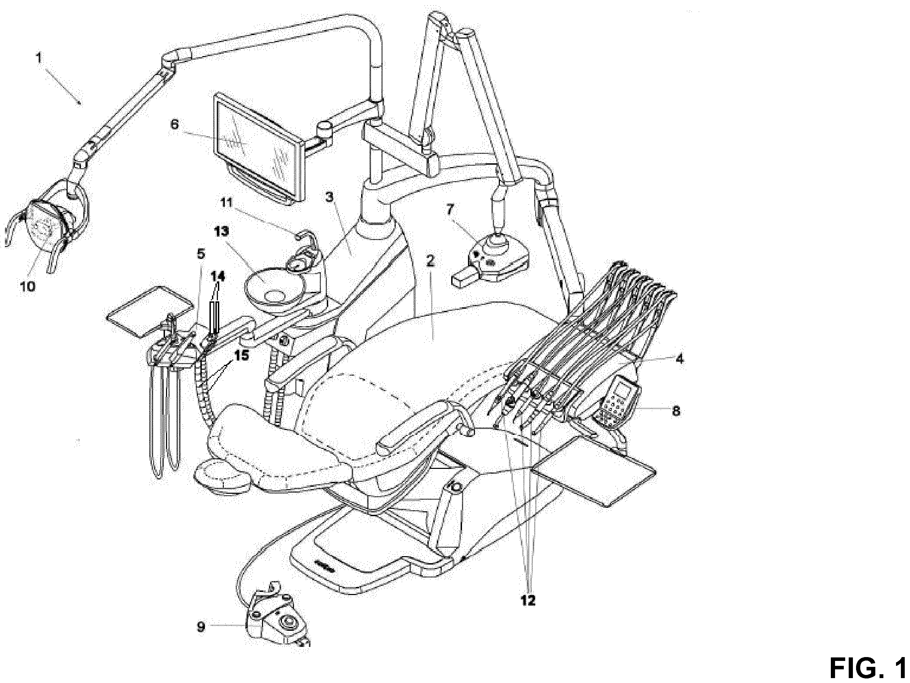

Figure 1 shows a dental treatment unit 1 according to the known art, comprising a patient chair 2 and a water unit 3. The water unit 3 typically supports a bowl 13, a dentist's board 4 provided with a dentist's control console 8 for inputting commands, and a plurality of dental instruments 12 supplying water (air/water syringe, micromotor, turbine, calculus scaler, etc.); an assistant's board 5; an operating lamp 10. The water unit 3 is also provided with a water-to-cup spout 11 for supplying water to a (not shown) glass. Finally, the dental treatment unit 1 is provided with a foot control 9 and can optionally comprise a screen 6 and an intraoral X-ray unit 7.

The assistant's table supports two suction cannulae 14, to be inserted into patient's oral cavity, mounted on respective suction tube terminals 18 applied to suction tubes 15. Traditionally they are of two different measures, one having a larger diameter, and the other having a smaller diameter. Said cannulae 14 are connected through said suction tubes 15 to said water unit 3. In the water unit 3 is optionally provided a (not shown) separator container, allowing to separate the suctioned liquids from air. Inside said water unit 3, said separator container is typically connected to a suction source, or again inside said water unit 3 there is provided a connection valve between said suction tubes 15 and an external suction system, e.g. a liquid ring suction system, which is placed upstream the dental treatment unit, often in a special engine room.

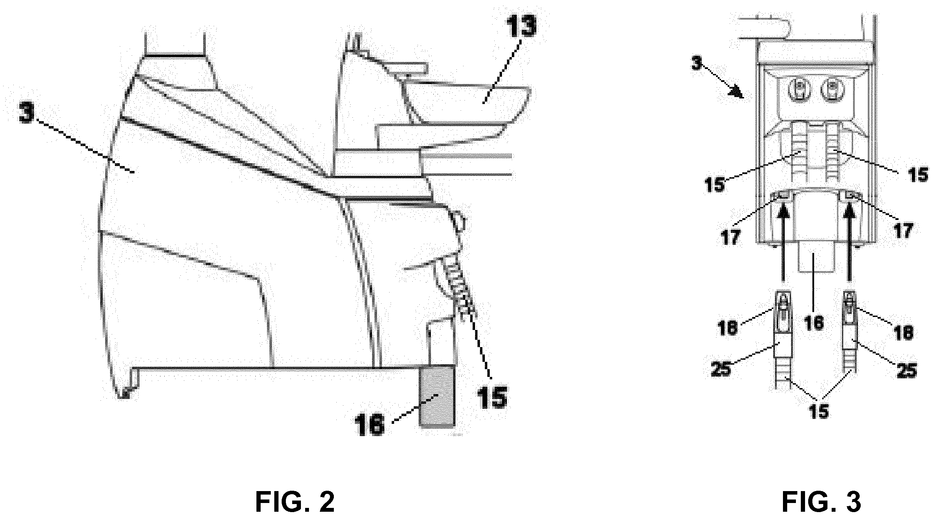

Figure 2 shows in a lateral view a typical water unit 3, wherefrom said suction tubes 15 depart, ending with their respective terminals 18 on which said suction cannulae 14 are removably inserted. Moreover, the Figure shows a reservoir 16 for said cleaning/disinfecting liquid ready for use for the cleaning and disinfection system of suction tubes.

Figure 3 shows the same water unit 3 of Figure 2 in a front view. The suction tubes 15 coming from their respective connection points to water unit 3 form a (not shown) loop, while the respective suction terminals 18 are connected to said water unit 3 for performing the cleaning cycle, inserting said terminals 18 on their special insertion points 17. The insertion of suction tube terminals 18 on their respective insertion points 17 generates a depression inside said tubes, which is detected by a specific pressure sensor 21, enabling the start of the cleaning cycle.

Moreover, Figure 3 shows that each corrugated tube 15 coming from water unit 3 is integral at its opposed end with a connector 25, which is removably coupled with a suction tube terminal 18 on which the (shown in Figure 1) disposable or sterilisable cannula 14 is inserted, for placement in patient's oral cavity.

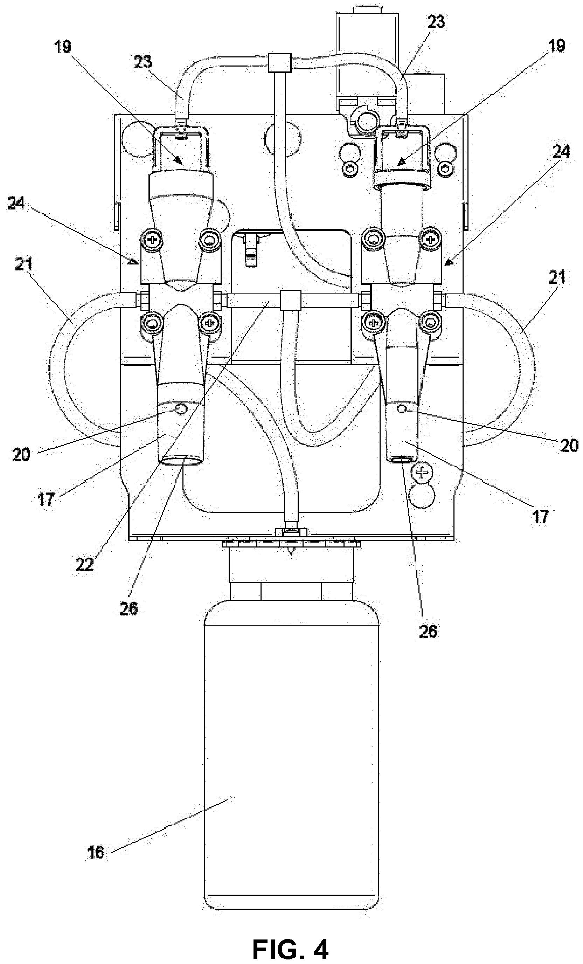

Figure 4 shows a detail of the water unit 3 without its housings, allowing to see the components of the cleaning system. In this Figure only a portion of the content of said water unit 3 is visible; the suction tubes 15 ending in their respective terminals 18 are not visible. Figure 4 shows the respective insertion bodies 24 of the suction tube terminals 18, which (not shown) terminals are inserted on their respective insertion points 17, and the reservoir 16 for the cleaning/disinfecting liquid, already shown in the preceding Figures.

As already mentioned, the suction tubes terminals 18, the suction tubes 15, the connectors 25 and the respective insertion points 17 are traditionally of two different sections, one larger than the other. Nonetheless, their operation is the same, and in the description of the Figure the two tubes are tackled without discriminating.

Figure 4 shows a cleaning system according to the known art, wherein each insertion body 24 is substantially a hollow tube. From top to bottom, the following insertion points are provided:
- upstream body 24 there is provided a tube 23 for water supply;
- through the top rim of body 24 nebulisation air enters through the top opening 19 of the body 24; said point 19 of entrance of nebulization air is downstream of water supply 23; said point 19 of entrance of nebulization air is the same of the known art;
- downstream said entrance points of water 23 and nebulization air 19 there is provided an entrance point of cleaning/disinfecting liquid 22. The entrance of the cleaning/disinfecting liquid, taken from its reservoir 16, occurs through Venturi effect inside said insertion body 24;
- a tube housing a depression sensor 21.

The entrance of both water and cleaning/disinfecting liquid to body 24 occurs through not shown respective solenoid valves.

According to the present invention, the body 24 is provided with a second opening 20 allowing the entrance of air downstream the entrance of nebulized liquid from the supply point 23 and nebulization air from the supply point 19.

According to a preferred embodiment, the second opening 20 respects at least one first condition in order to obtain the desired cleaning effect:
a. The position of said second opening 20 is provided as near as possible to the insertion point 17, and anyway said second opening 20 must be not more than 50 mm far from the bottom rim 26 of body 24;
   According to a further embodiment, which can be provided in combination with the preceding condition, in order to obtain the desired effect:
b. The extension of the second opening 20 must range 0.2 to 0.8 with respect to the extension of body 24 in the insertion point 17.

According to a third advantageous embodiment, both the features a and b of the preceding embodiments are provided in combination with each other.

It was experimentally verified that the presence of said second opening 20 generates a turbulent flow in the suction tube 15, and said turbulent flow allows the effective removal of artificial dirt applied on all the internal surface of the terminal portion of tube 15. The occurrence of a turbulent flow can be visually observed during the cleaning cycle, in that said tubes 15 under its action are visually shaken by the strong turbulence of air and liquid.

According to the present invention, the maximal cleaning efficacy is obtained combining the cleaning action of the turbulent flow with a special internal configuration of the connectors 25 of the tubes 15 to tubes terminal 18. In fact, by shaping the internal walls of said connectors 25 interposed between the suction tube 15 and the tube terminal 18 so as to connect the larger and the smaller diameter of the connector 25 without angles, recesses and areas of potential accumulation of debris and dirt are eliminated.

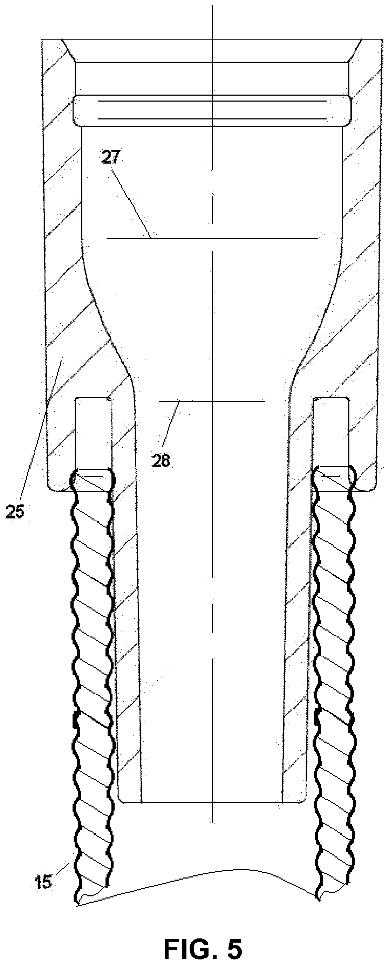

Figure 5 shows a longitudinal section of a corrugated tube 15 and of a connector 25 which are integral to each other. The internal walls of the connector 25 are tapered so as not to form angles and recesses difficult to clean passing from the larger diameter 27 to the smaller diameter 28.

In particular, the internal narrowing of the larger diameter of the connector 25 to the smaller diameter is obtained through a conical radial narrowing, providing a wall that is slightly concave towards the interior of the conical shape. This wall links with rounded segments, which are concave toward the portion of said connector 25 having the larger diameter 27, and convex toward the portion of the connector 25 having the smaller diameter 28.

Moreover, the above-described cleaning apparatus was provided with two cleaning cycles, a shorter one called Short Cycle and a more prolonged one called Intensive Cycle, both having an improved efficacy with respect to the currently used cycle described in the introduction.

The Short cleaning Cycle according to the present invention comprises the following steps:
- Insertion of suction tube terminals 18 into the body 24 at the insertion points 17;
- First supply of water in a continuous or pulsed flow from point 23 and at the same time suctioning of nebulization air from opening 19 and turbulent air from opening 20;
- Supply of cleaning/disinfecting liquid in a continuous or pulsed flow from reservoir 16 through suctioning via supply 22, and at the same time suctioning of nebulization air from opening 19 and turbulent air from opening 20;
- Second supply of water in a continuous or pulsed flow from point 23 and at the same time suctioning of nebulization air from opening 19 and turbulent air from opening 20;
- Suctioning of air only from opening 19 and 20 for drying the tubes 15 and connectors 25.
Said three components (water, cleaning/disinfecting liquid and air) mix spontaneously inside body 24, generating in the tube 15 and in the connector 25 a turbulent flow due to the presence of the second opening 20. Indicatively, said Short Cycle has a duration of about one minute.

The Intensive cleaning Cycle according to the present invention comprises the following steps:
- Insertion of suction tube terminals 18 into the body 24 at the insertion points 17;
- First supply of water in a continuous or pulsed flow from point 23 and at the same time suctioning of nebulization air from opening 19 and turbulent air from opening 20;
- First supply of cleaning/disinfecting liquid in a continuous or pulsed flow from reservoir 16 through suctioning via supply 22, and at the same time suctioning of nebulization air from opening 19 and turbulent air from opening 20;
- First stop of suctioning and first contact pause in order to provide the cleaning/disinfecting liquid with a suitable contact time;
- Second supply of cleaning/disinfecting liquid in a continuous or pulsed flow from reservoir 16 through suctioning via supply 22, and at the same time suctioning of nebulization air from opening 19 and turbulent air from opening 20;
- Second stop of suctioning and second contact pause;
- Second supply of water in a continuous or pulsed flow from point 23 and at the same time suctioning of nebulization air from opening 19 and turbulent air from opening 20;
- Suctioning of air only from opening 19 and 20 for drying the tubes 15 and connectors 25.
Said three components (water, cleaning/disinfecting liquid and air) spontaneously mix inside body 24, generating in the tube 15 and in the connector 25 a turbulent flow due to the presence of the second opening 20. Indicatively, said Intensive Cycle has a duration of about four minutes.

The control console 8 of dental treatment unit 1 allows the dental assistant to select which cycle (Short or Intensive) is to be performed. Once this choice performed, the insertion of suction tube terminals 18 on their respective insertion body 24 starts the automatic cleaning cycle with the above-described steps.

Alternatively or complementarly, the simple insertion of suction tube terminals 18 on the insertion body 24 generates the depression detected by sensor 21, which automatically starts the Short Cycle.

Alternatively or complementarly, the simple insertion of suction tube terminals 18 on the insertion body 24 generates the depression detected by sensor 21, which automatically starts the Short Cycle. Once the Short Cycle is finished, after a pre-set time of permanence of terminals 18 on their respective insertion points 17, automatically the Intensive Cycle starts.
- 1: dental treatment unit
- 2: patient chair
- 3: water unit
- 4: dentist's board
- 5: assistant's board
- 6: screen
- 7: intraoral X-ray unit
- 8: control console
- 9: foot control
- 10: operating lamp
- 11: water-to-cup spout
- 12: dental instruments
- 13: bowl
- 14: suction cannula
- 15: suction tubes
- 16: reservoir for cleaning/disinfecting liquid
- 17: insertion point for suction tubes terminal
- 18: cannula terminal
- 19: first opening for nebulization air
- 20: second opening for turbulence air
- 21: depression sensor
- 22: supply of cleaning/disinfecting liquid
- 23: supply of water
- 24: body of insertion of cleaning system
- 25: connector
- 26: lower rim of the insertion body
- 27: larger diameter
- 28: smaller diameter

## Claims

1. Apparatus for the automatic cleaning of suction tubes (15) of a dental treatment unit (1) comprising a body (24) for the insertion of suction tube terminals (18), in its turn comprising:
- A first opening (19) for supplying environmental nebulization air,
- A point (23) water supply,
- A point (22) for supplying a cleaning/disinfecting liquid,
**characterized in that**
it comprises at least a second opening (20) for supplying turbulence air, in a position placed between the point (23) of water supply and the point (22) of supply of a cleaning/disinfecting liquid on one side and a point (17) of insertion of tubes terminal (18) on the other side, with the function of perturbing the suctioned flow with an entrance of air capable of generating a strong turbulence in said tube (15).

2. Apparatus for the automatic cleaning of suction tubes according to claim 1, wherein:
c. The position of said second air opening (20) is as near as possible to the insertion point (17), and anyway not farther than 50 mm from the bottom rim (26) of body (24);

3. Apparatus for the automatic cleaning of suction tubes according to claim 1 or 2, wherein:
d. The surface area of said second aperture (20) has an extension ranging 0.2 - 0.8 times the area of the section of body (24) in the insertion point (17).

4. Apparatus for the automatic cleaning of suction tubes according to one or more of the claims 1 to 3, wherein:
e. A first opening (19) for suctioning nebulizing air from the environment is upstream said second opening (20) and near to the entrance point (23) of water, so as to generate with the water suctioned from said opening (19) a fine nebulization of the liquid suctioned from the supply point (23);
f. Said first opening (19) for the entrance of nebulization air has an extension larger than the area of the section of the point (23) of liquid supply.

5. Apparatus for the automatic cleaning of suction tubes according to one or more of the preceding claims, wherein said suction tubes (15) are connected with their first end to a water unit (3) of a dental treatment unit (1), while at their opposing and the suction tubes shows:
g. a connector (25) integral with said tube (15),
h. a removable suction tube terminal (18),
i. a disposable or sterilisable cannula (14) which is inserted into patient's oral cavity to perform suctioning during dental therapies.

6. Apparatus for the automatic cleaning of suction tubes according to one or more of the preceding claims, wherein said body (24) for the insertion of the cleaning system and said reservoir (16) for the cleaning/disinfecting liquid are placed in the dental unit (3) of said dental treatment unit (1).

7. Apparatus for the automatic cleaning of suction tubes according to one or more of the preceding claims, in combination with a connector (25) of said suction tube (15), whose lumen has tapered surfaces without recesses or angles, connecting its larger diameter (27) to its shorter diameter (28).

8. Method for performing an automatic cleaning cycle making use of the apparatus according to claims 1 to 7, through at least the flow of a cleaning/disinfecting liquid, **characterized in that** it comprises at least a step of inletting a flow of water and/or a cleaning/disinfecting liquid in a continuous or pulsed flow, and concurrent suctioning of air from at least two points of suctioning having a different position with reference to fluid flow, in order to generate and maximize the turbulence of said flows.

9. Method according to claim 8 for performing an automatic Short cleaning Cycle making use of the apparatus according to claims 1 to 7, comprising the following steps:
j. Insertion of suction tube terminals (18) into the body (24) at the insertion points (17);
k. First supply of water in a continuous or pulsed flow from point (23) and at the same time suctioning of nebulization air from opening (19) and turbulent air from opening (20);
l. Supply of cleaning/disinfecting liquid in a continuous or pulsed flow from reservoir (16) through suctioning via supply (22);
m. Second supply of water in a continuous or pulsed flow from point (23) and at the same time suctioning of nebulization air from opening (19) and turbulent air from opening (20);
n. Suctioning of air only from opening (19) and (20) for drying the tubes (15) and connectors (25);
in the terminal (18), connector (25) and suction tube (15) a turbulent flow of a mixture of air, water and cleaning/disinfecting liquid being generated thanks to the presence of a second air opening (20) on the body (24) of insertion of the cleaning system; said Short Cycle having preferably a duration of about one minute.

10. Method according to claim 8 for performing an automatic Intensive cleaning Cycle making use of the apparatus according to claims 1 to 7, comprising the following steps:
o. Insertion of suction tube terminals (18) into the body (24) at the insertion points (17);
p. First supply of water in a continuous or pulsed flow from point (23) and at the same time suctioning of air from opening (19) and opening (20);
q. First supply of cleaning/disinfecting liquid in a continuous or pulsed flow from reservoir (16) through suctioning via supply (22);
r.First stop of suctioning and first contact pause in order to provide the cleaning/disinfecting liquid with a suitable contact time;
s. Second supply of cleaning/disinfecting liquid in a continuous or pulsed flow from reservoir (16) through suctioning via supply (22);
t. Second stop of suctioning and second contact pause;
u. Second supply of water in a continuous or pulsed flow from point (23) and at the same time suctioning of air from opening (19) and opening (20);
v. Suctioning of air only from opening (19) and (20) for drying the tubes (15) and connectors (25);
in the terminal (18), connector (25) and suction tube (15) a turbulent flow of a mixture of air, water and cleaning/disinfecting liquid being generated thanks to the presence of a second air opening (20) on the body (24) of insertion of the cleaning system; said Intensive Cycle having preferably a duration of about four minutes.
